# EUROPÄISCHE PATENTSCHRIFT

(11) **EP 2 946 169 B1**
(45) Veröffentlichungstag und Bekanntmachung des Hinweises auf die Patenterteilung: **22.02.2017**
(21) Anmeldenummer: 14701160.5
(22) Anmeldetag: 15.01.2014
(51) Int. Cl.: G01C 21/36

(54) **NAVIGATIONSVERFAHREN UND -VORRICHTUNG**
NAVIGATION METHOD AND DEVICE
PROCÉDÉ ET DISPOSITIF DE NAVIGATION

(30) Priorität: 18.01.2013 DE 102013100504
(43) Veröffentlichungstag der Anmeldung: 25.11.2015
(73) Patentinhaber: Durst, Andreas F., 42719 Solingen (DE)
(72) Erfinder: Durst, Andreas F., 42719 Solingen (DE)
(74) Vertreter: Buse, Mentzel, Ludewig Patentanwaltskanzlei
(86) Internationale Anmeldenummer: PCT/EP2014/050664
(87) Internationale Veröffentlichungsnummer: WO 2014/111404

(56) Entgegenhaltungen:
- WO-A1-2012/062760
- DE-A1-102007 037 938
- JP-A- 2000 258 174
- US-A1- 2012 150 436

## Beschreibung

Die Erfindung betrifft ein Verfahren für ein verbessertes Navigationssystem sowie eine Vorrichtung zur Durchführung des Verfahrens.

Navigationssysteme sind aus dem Stand der Technik bekannt und werden dazu benutzt, eine Navigationsroute zu erstellen, die von einem bestimmten Startpunkt zu einem bestimmten Endpunkt führt. Einfache bekannte Verfahren bestehen beispielsweise durch die Nutzung einer Karte mit Hilfe welcher manuell eine Navigationsroute gefunden wird.

Neuere Navigationssysteme nutzen elektronische Kartendaten, wobei durch eine meist computergestützte Steuerung die Navigationsroute anhand des eingegebenen Startpunktes und des eingegebenen Endpunktes automatisch erstellt wird. Hierbei können mehrere Arten von Navigationsrouten erstellt werden, beispielsweise die kürzeste Route oder die schnellste Route.

Solche durch elektronische Kartendaten gestützte Navigationssysteme sind in der Lage die errechnete Navigationsroute als Karte darzustellen, wobei die berechnete Route in der Karte eingezeichnet wird, oder in Tabellenform, in der jeder auf der Navigationsroute errechnete Wegpunkt eingetragen wird, geordnet vom Startpunkt aus zum Endpunkt.

Zusätzlich ist es bei einigen Navigationssystemen möglich, Verkehrsdaten zu den einzelnen Wegpunkten der Navigationsroute zu verknüpfen. Hierzu können entweder zu den einzelnen Wegpunkten veröffentlichte Verkehrsmeldungen manuell durchsucht werden oder ein Radioempfangsmodul, welches den sogenannten Traffic Message Channel (TMC) benutzt abgefragt werden. TMC sendet Verkehrsdaten frei verfügbar über Radiowellen aus. Diese Verkehrsdaten können dann mit in der Tabelle angezeigt werden, oder aber in die Kartenansicht eingetragen werden.

Weiterhin ist es einigen neueren Navigationssystemen möglich, Wetterdaten am Start- und Endpunkt zu erkennen. Auch hierzu kann entweder manuell der Wetterbericht am Start- und Endpunkt erfragt werden, oder aber auf elektronischem Wege über Wetterdienste im Internet. Diese Wetterdaten werden dann ebenfalls in der tabellarischen Ansicht angezeigt.

Nachteilig für die bisher bekannten Navigationssysteme ist jedoch, dass letztgenannte Wetterdaten lediglich zum Start- und Endpunkt abgefragt und angezeigt werden. Die Wetterdaten dienen auch meist nur zur reinen Information und ändern nichts an der Berechnung der Navigationsroute, beispielsweise an der benötigten Zeit für die Navigationsroute. Ebenfalls nachteilig für vorhandene Navigationssysteme ist, dass das Wetter nicht grafisch in den Verlauf der Route eingearbeitet wird. Das Wetter wird als reine Information jeweils zum Start- und Endpunkt nur angezeigt.

So zeigt die DE 101 39 668 A1 ein Verfahren zum Erzeugen von fahrtroutenbezogenen Wetterinformationen. Hierbei werden Wetterinformationen anhand der Fahrroute berechnet und angezeigt. Die Reisezeitberechnung und die Zielzeit werden durch die Wetterangaben jedoch nicht verändert.

Ebenso zeigt die DE 10 2006 025 911 A1 ein ähnliches Verfahren mit dazugehörigem Navigationssystem. Auch hier werden die Wetterinformationen zwar vorausberechnend dargestellt, Sie haben aber keinen Einfluß auf die Zielzeit und die Reisezeitberechnung.

Beide Verfahren benutzen die berechnete Fahrzeit, um zum Zeitpunkt der Durchfahrt an den einzelnen Wegpunkten das vorausberechnete Wetter anzuzeigen. Dieses hat jedoch keinen Einfluss auf die errechnete Zielzeit. Eine solche weitere Anwendung zeigt die US 2009/0248285 A1.

Die DE 10 2011 085 372 erweitert die oben genannten Verfahren um Streckenabschnitte, sogenannte Teilbereiche. Hier wird pro Teilbereich aufgrund der Wetterdaten ggf. eine Ausweichstrecke ausgewählt um einen maximalen Schönwetterbereich während der Fahrt zu erhalten. Aber auch hier wird das Wetter nicht auf die Zielzeit oder die Zeit für die Teilbereiche angerechnet.

Die US 2007/0055443 A1 benutzt ebenfalls Teilbereiche. Auch hier werden Wetterdaten abgefragt, diese haben jedoch nur den Einfluss, darauf, zu welcher Zeit bei verschiedenem Wetter welche Fahrspur optimal ist. Das Wetter hat hier nur den Einfluss auf die Fahrspurbestimmung.

Die JP 2002 258174 A zeigt ebenfalls ein solches Navigationssystem mit Teilbereichen, wobei hier jedoch die Wetterdaten nur auf einzelne Wegpunkte, nicht auf die Teilbereiche der Wegstrecke angerechnet werden. Eine individuelle Anpassung der Zeitfaktoren der einzelnen Wetterkonditionen ist nicht möglich und eine Diagrammdarstellung ist nicht vorgesehen. Ebenso ist eine regelmäßige Aktualisierung der Wetterdaten nicht vorgesehen.

Ähnlich verhält es sich mit der WO 2012/062760 A1 sowie der DE 10 2007 037 938 A1. Hierbei werden ebenfalls die Wetterdaten nicht einzelnen Wegstrecken sondern nur Wegpunkten zugeordnet. Ebenso ist die Diagrammdarstellung nicht vorgesehen, sowie die individuelle Anpassung der Zeitfaktoren der einzelnen Wetterkonditionen.

Der vorliegenden Erfindung liegt also die Aufgabe zugrunde ein Verfahren für ein verbessertes Navigationssystem bereitzustellen, sowie eine Vorrichtung zur Durchführung des verbesserten Verfahrens. Ebenso ist es Aufgabe der vorliegenden Erfindung diese Verbesserung entsprechend nützlich optisch anzuzeigen.

Die Aufgabe des verbesserten Verfahrens für Navigationssysteme wird durch den Anspruch 1 gelöst, sowie der Vorrichtung zur Durchführung des Verfahrens aus Anspruch 11. Die Vorrichtung löst zudem die Aufgabe der entsprechenden optischen Darstellung.

Das Verfahren für ein verbessertes Navigationssystem besteht dabei aus einem Verfahren, bei dem zunächst die Start- und Endpunkte festgelegt werden. Dies kann dadurch geschehen, dass der Anwender des Verfahrens diese Punkte manuell wählt oder bei einem computergestützten System den Start- und Endpunkt eingibt. Ein computergestütztes System kann hierbei eine Internetseite, ein installierbares Programm für einen Computer, eine sogenannte App für Computer- und Mobilsysteme, wie beispielsweise Tabletcomputer oder Handys, oder auch computergestützte Vorrichtungen, wie sie in Anspruch 11 beschrieben sind, sein.

Nach Festlegung des Start- und Endpunktes wird mittels Zugriff auf elektronisches Kartenmaterial eine Navigationsroute, bestehend aus mehreren Wegpunkten, erstellt, wobei mindestens ein Wegpunkt zwischen Start- und Endpunkt liegt. Diese Erstellung der Navigationsroute kann über bereits bekannte Navigationssysteme erfolgen oder als Internetabfrage. Hierbei kann auch ebenfalls, wie bereits oben beschrieben, vorgegeben werden, ob die Navigationsroute den kürzesten Weg oder den schnellsten Weg oder eine Mischung aus beidem von Start zum Endpunkt darstellen soll.

Die Route wird in mehrere Wegpunkte unterteilt, wobei mindestens ein Wegpunkt zwischen Start- und Endpunkt der Navigationsroute liegt. Je höher die Anzahl der Wegpunkte, desto genauer ist anschließend die Navigationsroute, d. h. um so detaillierter bekommt der Anwender die einzelnen auf dem Weg liegenden Punkte beschrieben. Bei einer zu hohen Anzahl von Wegpunkten kann die Navigationsroute allerdings auch für den Anwender unübersichtlich werden.

Danach werden zu den einzelnen Wegpunkten jeweils, mittels einer Internetabfrage, die aktuellen Wetterdaten abgefragt. Es ist notwendig, die einzelnen Wetterdaten zu den einzelnen Wegpunkten abzufragen, damit die Navigationsroute über den Verlauf vom Start- zum Endpunkt das jeweilige Wetter auf dem jeweiligen Streckenabschnitt zwischen den Wegpunkten enthält. Die Angabe der Wetterdaten auf den einzelnen Abschnitten zwischen den Wegpunkten ist der Kern des vorliegenden Verfahrens für ein verbessertes Navigationssystem, wie bereits in der Aufgabe beschrieben. Die durch dieses Verfahren erhaltene Navigationsroute enthält somit die einzelnen Wegpunkte auf der Navigationsroute, zu den einzelnen Wegpunkten zugeordnet jeweils Wetterdaten der Navigationsroute, die benötigte Zeit von einem Wegpunkt zum Nächsten sowie vom Start- zum Endpunkt, die unterschiedlichen Temperaturen an den einzelnen Wegpunkten und den Höhenverlauf der Strecke.

Die benötigte Zeit für die Streckenabschnitte sowie vom Start- zum Endpunkt, die geografische Höhe der einzelnen Wegpunkte und die Wegpunkte an sich werden aus der Internetabfrage der Navigationsroute bei bereits bekannten Navigationssystemen erhalten. Die Temperatur- und die einzelnen Wetterdaten werden bei der Internetabfrage der Wetterdaten erhalten. Durch die Verknüpfung der Wetterdaten mit den einzelnen Wegpunkten kann also ein genaueres Fahrprofil entlang der Navigationsroute erstellt werden, als es mit herkömmlichen Navigationssystemen bisher möglich war. Ebenso ist es möglich, durch die erhaltenen Wetterdaten die Zeit, die benötigt wird zwischen den einzelnen Wegpunkten, sowie vom Start- zum Endpunkt, den Wetterdaten anzupassen. Bei schlechtem Wetter wird dann mehr Zeit zwischen den einzelnen Wegpunkten benötigt, als bei gutem Wetter.

Die abgefragten Wetterdaten können unter anderem die Zustände Schnee, Eisglätte, Regen, Trockenheit, Hagel, starker Wind, Windböen und Nebel enthalten, wobei jeder dieser Wetterzustände unterschiedliche Einflüsse auf die Berechnung der Zeit zwischen den einzelnen Wegpunkten enthält. Diese Zeiteinflüsse sind individuell anpassbar. Sollte sich beispielsweise Eisglätte zwischen zwei Wegpunkten befinden, sollte sehr viel mehr Zeit für die betroffene Wegstrecke benötigt werden, als bei trockener Fahrbahn.

Die aus der Erstellung der Navigationsroute erhaltenen Wegpunkte und/oder die aus der Internetabfrage zum Wetter erhaltenen Wetterdaten können in einer Tabelle oder Liste abgelegt werden. Optimalerweise werden die Wegpunkte in der Tabelle vom Startpunkt zum Zielpunk sortiert. In dieser Tabelle können dann die erhaltenen Wetterdaten den jeweiligen Wegpunkten zugeordnet werden. Außerdem kann in der Tabelle der Zeiteinfluss der obengenannten verschiedenen Wetterzustände auf die benötigte Zeit eines Streckenabschnittes eingetragen werden. Somit erhält man eine übersichtliche Tabelle über den Verlauf der Navigationsroute mit den zugehörigen Wetterdaten.

Aus den Wegpunkten und den jeweiligen Wetterdaten wird ein Diagramm erstellt. Dieses Diagramm ist dabei bevorzugterweise eine segmentierte Linie, dessen Segmente durch die einzelnen Wegpunkte bestimmt werden. An einem Ende der segmentierten Linie befindet sich dann der Startpunkt und am anderen Ende der Endpunkt der Route. Vorteilhaft hierbei ist, dass die einzelnen Routensegmente unterschiedlich dargestellt werden können, beispielsweise durch unterschiedliche Schraffur oder durch unterschiedliche Farbgebung, jeweils in Abhängigkeit des auf diesem Streckenabschnitt befindlichen Wetters. Durch diese Diagrammansicht wird besonders deutlich, wo Gefahren durch das Wetter herrschen und welchen Streckenabschnitt man dann am Besten umgehen sollte.

Wenn das Verfahren auf einem mobilen System, beispielsweise auf einem Tabletcomputer oder auf einem Handy oder einer entsprechenden Vorrichtung aus Anspruch 11, ausgeführt wird, bietet sich an, eine Ortsbestimmung in regelmäßigen Abständen durchzuführen. Diese Ortsbestimmung kann beispielsweise durch einen GPS-Empfänger realisiert werden, oder auch durch Sendezellenbestimmung bei mobilfunkfähigen Geräten. Durch diese Ortsbestimmung kann dann jeweils der passende Eintrag in der Tabelle markiert werden, oder auch das passende Segment und/oder der passende Wegpunkt in dem obengenannten Diagramm. Dadurch kann der Anwender zu jeder Zeit erkennen, auf welcher Position der Navigationsroute er sich momentan befindet. Die Ortung kann aber auch nur einmal durchgeführt werden, beispielsweise um den Startpunkt festzulegen.

In einem weiteren Ausführungsverfahren werden zusätzlich zu den einzelnen Wegpunkten aktuelle Staumeldungen abgefragt. Dies kann beispielsweise durch ein entsprechendes Radioempfangsmodul, welches den sogenannten Traffic Message Channel (TMC) beherrscht, geschehen. Aktuelle Verkehrsdaten werden über Funksignale im Radiobereich übertragen und können jederzeit abgefragt werden. Diese Staumeldungen werden dann ebenfalls den einzelnen Wegpunkten zugeordnet und in der Tabelle bzw. dem Diagramm eingetragen. Hierzu ist es vorteilhaft, entsprechende Warnhinweise zu benutzen, die dann mit Warnsymbolen versehen werden oder in entsprechender Signalfarbe bzw. Farbblinken dargestellt werden. Hierdurch kann der Anwender des Verfahrens nicht nur die Gefahren des Wetters einschätzen sondern auch entsprechend der Staumeldungen ggf. eine Umgehung wählen.

Bevorzugterweise werden die obengenannten Wetterabfragen und/oder die Stauabfragen zu den einzelnen Wegpunkten in festgelegten Zeitabständen wiederholt, um alle Daten aktuell zu halten. Das Wetter kann sich über die Dauer der Navigation natürlich ändern und auch die Verkehrsmeldungen können sich über die Zeit ändern. Durch diese Ausführungsform stehen dem Verfahren immer aktuelle Werte zur Verfügung.

Wie bereits beschrieben ist das Verfahren nicht nur als manuelles Verfahren anzuwenden, sondern auch als computergestütztes Verfahren innerhalb eines installierbaren Programmes, einer aufrufbaren Internetseite, eine App für Mobilgeräte oder einer entsprechenden Vorrichtung. Eine entsprechende Vorrichtung zur Durchführung des obengenannten Verfahrens ist in Anspruch 11 beansprucht. Diese erfindungsgemäße Vorrichtung besteht aus einem Gehäuse mit einer Anzeige und einem GPS-Empfänger. Die Anzeige kann hierbei eine reine Textanzeige sein, die dann beispielsweise die Verfahrenstabelle anzeigt, oder eine Grafikanzeige, bevorzugterweise bunt, die dann beispielsweise das Diagramm des Verfahrens anzeigt. Der GPS-Empfänger sorgt für die Ortung der Vorrichtung. Weiterhin enthalten in der Vorrichtung, ist eine computergestützte Steuerung, die die Steuerung der Anzeige sowie des GPS-Empfängers vornimmt. Ebenso enthält die Vorrichtung Bedienelemente zur Eingabe des Start- und/oder Endpunktes. Auch diese Bedienelemente werden von der computergestützten Steuerung gesteuert.

Zur Durchführung des obengenannten Verfahrens mittels dieser Vorrichtung wird nun mittels der Bedienelemente der Start- und Endpunkt festgelegt, wobei der Startpunkt auch die aktuelle durch den GPS-Empfänger festgelegte Position sein kann. Über eine in der Vorrichtung befindliche Internetverbindung und/oder einer Möglichkeit zum Anschließen eines Gerätes, welches eine Internetverbindung ermöglicht, wird dann mittels elektronischen Kartenmaterials eine Navigationsroute bestehend aus mehreren Wegpunkten erstellt. Das elektronische Kartenmaterial kann jedoch auch Lokal auf einem Speichermedium in der Vorrichtung vorhanden sein. Hierbei liegt mindestens ein Wegpunkt zwischen dem Start- und Endpunkt. Danach werden ebenfalls mittels einer Internetabfrage zu den einzelnen Wegpunkten jeweils die aktuellen Wetterdaten abgefragt. Die abgefragten Wetterdaten werden dann den jeweiligen Wegpunkten zugeordnet. Die Abfrage der Wegpunkte, die Abfrage des Wetters an den einzelnen Wegpunkten und die Darstellung auf dem Display werden dabei ebenfalls von der computergestützten Steuerung übernommen. Wie bereits im Verfahren beschrieben, können die erlangten Daten in Tabellenform oder in Diagrammform aufbereitet werden und mittels der computergestützten Steuerung auf der Anzeige dargestellt werden. Eine weitere Darstellungsmöglichkeit der erlangten Daten besteht darin, wie bei einem herkömmlichen Navigationssystem eine Karte anzuzeigen, auf der die zu navigierende Strecke eingezeichnet wird. Hierbei kann die Karte genordet oder in Fahrtrichtung angezeigt werden. Im Falle der Kartendarstellung werden dann die Routensegmente durch die im Verfahren beschriebenen unterschiedlichen Schraffierungen und/oder Farben eingetragen. Im Grunde genommen ähnelt diese Darstellung der Diagrammdarstellung, nur wird die Strecke nicht als segmentierte Linie, sondern als tatsächlich vorhandener Weg in die Karte eingezeichnet. Es bleiben jedoch die Wegpunkte, die Segmentierung der Strecke durch die einzelnen Wegpunkte und die unterschiedliche grafische Darstellung der Streckenabschnitte zwischen den Wegpunkten.

In einer bevorzugten Ausführungsform der Vorrichtung ist zusätzlich ein Radioempfangsmodul, welches Traffic Message Channel (TMC)-fähig ist vorgesehen, über welches die computergestützte Steuerung der Vorrichtung die Abfrage der Staumeldungen vornimmt. Dies kann einmalig geschehen oder in festgesetzten bzw. frei definierbaren Zeitabständen, um die Staumeldungen aktuell zu halten. Verfahrensgemäß werden dann die Staumeldungen als Warnhinweise bzw. Symbole in der Karte und/oder dem Diagramm und/oder der Liste dargestellt. Sollte die Anzeige in der Vorrichtung als grafische Anzeige ausgestaltet sein, ist es natürlich auch möglich, zwischen den einzelnen Anzeigen, also Tabelle, Diagramm und/oder Kartendarstellung, zu wechseln.

In einer weiteren bevorzugten Ausführungsform ist eine Ausgabemöglichkeit für akustische Signale vorgesehen, um Warntöne für Gefahrenstellen beispielsweise durch schlechtes Wetter und/oder Staumeldungen bekannt zu geben. Als akustisches Signal kann auch eine Sprachausgabe vorgesehen sein, die den Anwender dann darauf hinweist, welche Gefahr in einem bestimmten Streckenabschnitt zu erwarten ist. Die normale Sprachausgabe für die Routenführung, wie sie in herkömmlichen Navigationssystemen bereits bekannt ist, kann ebenfalls über diese Ausgabemöglichkeit für akustische Signale ausgegeben werden.

In einer weiteren bevorzugten Ausführungsform ist die Anzeige der Vorrichtung als Berührungsbildschirm ausgebildet. Dadurch können Eingabebefehle und/oder Wahl des Start- und Endpunktes und/oder die Funktion der Bedienelemente durch den Berührungsbildschirm realisiert werden. Hierbei stellt die computergestützte Steuerung dann die entsprechenden Bedienelemente, wie beispielsweise Tastatur zur Eingabe des Start- und Endpunktes oder auch Kontrollen des Navigationssystems, wie beispielsweise Navigation starten, Navigation anhalten etc., auf dem Bildschirm dar. Durch Berührung der entsprechenden Elemente auf dem Bildschirm löst man dann die entsprechende Funktion aus.

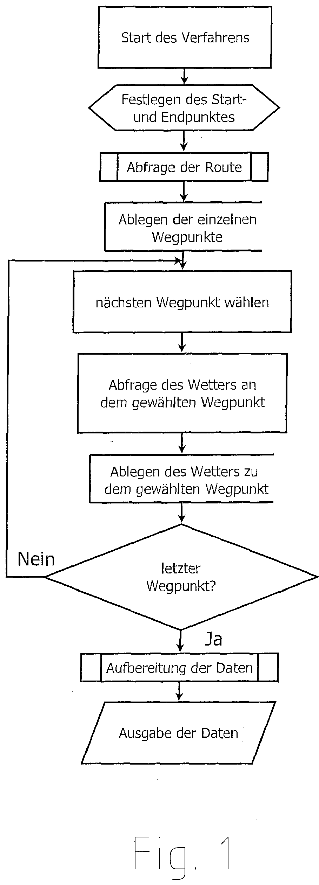

Weitere Vorteile der vorliegenden Erfindung ergeben sich aus der nachfolgenden Zeichnung sowie der Beschreibung dazu. Es zeigt Fig. 1 ein Flussdiagramm auf ein erfindungsgemäßes Verfahren.

In Fig. 1 ist ein erfindungsgemäßes Verfahren als Flussdiagramm dargestellt. Nach dem Start werden die Start- und Endpunkte der zu navigierenden Route festgelegt. Als nächster Schritt wird unter Benutzung der Start- und Endpunkte der zu navigierenden Route mittels elektronischer Kartendaten eine Abfrage der Navigationsroute vorgenommen. Aus der Abfrage erhält man verfahrensgemäß mehrere Wegpunkte, wobei mindestens ein Wegpunkt zwischen Start- und Endpunkt liegt. Die einzelnen Wegpunkte werden dann abgelegt, d. h. in einer Liste, einer Tabelle oder in anderer Form festgehalten.

Nun werden zu den festgehaltenen Wegpunkten für jeden einzelnen Wegpunkt durch jeweils eine Internetabfrage die aktuellen Wetterdaten abgefragt. Dazu wird zunächst der nächste Wegpunkt gewählt. Nach dem Start des Verfahrens ist dies der erste festgehaltene Wegpunkt, der vorhanden ist. Bevorzugterweise werden die Wegpunkte vom Start- zum Endpunkt sortiert und dann festgehalten. Nachdem der Wegpunkt gewählt ist, wird für diesen einen Wegpunkt über eine Internetabfrage das Wetter an dem gewählten Wegpunkt abgefragt. Die erhaltenen Wetterdaten werden dem gewählten Wegpunkt zugeordnet. Auch diese Zuordnung kann über eine Liste, eine Tabelle oder in anderer geeigneter Form geschehen.

Nun entscheidet sich, ob der zuletzt gewählte Wegpunkt der letzte festgehaltene Wegpunkt (bei einer sortierten Liste ist dies der gewählte Endpunkt) ist, oder nicht. Sollten noch weitere Wegpunkte vorhanden sind, wird im Flussdiagramm zu dem Punkt gesprungen, an dem der nächste Wegpunkt gewählt wird. Diese Schleife wird solange durchlaufen, bis an der Entscheidung, ob der letzte gewählte Wegpunkt der letzte festgehaltene Wegpunkt ist, diese Entscheidung mit Ja beantwortet wird.

Ist also der letzte Wegpunkt abgearbeitet erfolgt die Aufbereitung der Daten. Diese Aufbereitung kann, wie in der Beschreibung des Verfahrens beschrieben, als Liste, Tabelle, Diagramm oder Karte dargestellt werden. Im Falle einer Liste oder Tabelle werden dem jeweiligen Wegpunkt die entsprechenden Wetterdaten zugeordnet, damit dem Anwender klar ist, welches Wetter zu welchem Wegpunkt gehört. Die Diagrammdarstellung erfolgt durch die bereits beschriebene segmentierte Linie, wobei die Segmente durch die einzelnen Wegpunkte begrenzt sind, und diese Wegpunkte und/oder die Segmente dann mit unterschiedlichen Farben und/oder Schraffierungen dargestellt werden. Bei der Kartendarstellung wird der Weg, welcher auch im Diagramm dargestellt ist, auf einen tatsächlichen Weg oder Straße projiziert und somit die Route in einer geografischen Karte dargestellt. Auch hier werden die einzelnen Segmente mit unterschiedlichen Farben und/oder Schraffierungen dargestellt.

Nach der Aufbereitung der Daten werden diese ausgegeben. Im Falle eines computergestützten Systems erfolgt dies auf einer Anzeige. Wird das Verfahren manuell angewandt, ist durch die Aufbereitung der Daten an sich als Liste, Tabelle oder Ähnliches bereits die Ausgabe der Daten vorhanden.

Die vorliegende Erfindung ist nicht auf die in der Beschreibung genannten Ausführungsbeispiele beschränkt, sonder es sind vielmehr noch weitere Merkmale denkbar. So ist z. B. die Diagrammdarstellung nicht nur als Liniendiagramm, sondern auch als Tortendiagramm denkbar. Andere Diagrammdarstellungen sind ebenfalls denkbar. Weiterhin ist es denkbar, dass das Liniendiagramm waagerecht verläuft und auf der Linie die jeweilige geografische Höhe der einzelnen Wegpunkte angezeigt wird. Dies kann durch Balken oder auch durch eine Höhenverlaufslinie geschehen. Höhenlinien könnten auch in der Kartenansicht dargestellt werden.

## Patentansprüche

1. Verfahren für ein verbessertes Navigationssystem,
bei welchem zunächst der Start- und Endpunkt festgelegt wird,
dann mittels Zugriff auf elektronisches Kartenmaterial eine Navigationsroute, bestehend aus mehreren Wegpunkten, erstellt wird,
wobei mindestens ein Wegpunkt zwischen Start- und Endpunkt liegt,
dann zu den einzelnen Wegpunkten jeweils mittels einer Internetabfrage die aktuellen Wetterdaten abgefragt werden, sowie die benötigte Zeit für die Streckenabschnitte zwischen den Wegpunkten,
dann die Wetterdaten den jeweiligen Wegpunkten, sowie den Streckenabschnitten zwischen den Wegpunkten zugeordnet werden,
den unterschiedlichen Wetterdaten Korrekturwerte für die benötigte Zeit zugeordnet sind
die benötigte Zeit für die Streckenabschnitte zwischen den Wegpunkten aufgrund des vorherrschenden Wetters auf den Streckenabschnitten, sowie vom Start- zum Endpunkt, durch die entsprechenden Korrekturwerte angepasst wird,
wobei die Wegpunkte und/oder die Wetterdaten in einer Tabelle abgelegt werden und nach Ihrer Entfernung vom Startpunkt aus sortiert werden,
wobei die sortierten Wegpunkte und/oder Wetterdaten als Diagramm aufbereitet werden,
wobei durch eine geeignete Ortsbestimmung im Diagramm die momentane Position des Anwenders eingetragen wird
und die Korrekturwerte für die unterschiedlichen Wetterdaten individuell anpassbar sind
wobei das Diagramm eine segmentierte Linie ist, dessen Segmente durch die einzelnen Wegpunkte bestimmt werden und dessen Darstellung der Segmente je nach Wetterdaten unterschiedlich ist
und wobei die unterschiedlichen Darstellungen der Routensegmente durch unterschiedliche Farbgebung und/oder unterschiedliche Muster geschieht.

2. Verfahren nach Anspruch 1, wobei durch eine Internetabfrage und/oder eines Radioempfangsmodul, welches Traffic Message Channel (TMC)-fähig ist, zu den einzelnen Wegpunkten Staumeldungen abgefragt werden.

3. Verfahren nach Anspruch 2, wobei Staue an oder zwischen den Wegpunkten ebenfalls im Diagramm angezeigt werden.

4. Verfahren nach einem der Ansprüche 1 bis 3, wobei in festgelegten Zeitabständen die Wetterabfrage und/oder Stauabfrage zu den einzelnen Wegpunkten wiederholt wird, um die Wetterdaten aktuell zu halten.

5. Vorrichtung welche ein Programm oder eine App zur Durchführung des Verfahrens nach einem der Ansprüche 1 bis 4, umfasst,
mit einem Gehäuse, einer Anzeige, einem GPS-Empfänger,
mit Bedienelementen zur Eingabe des Start- und/oder Endpunktes,
mit einer Internetverbindung und/oder einer Möglichkeit zum Anschließen eines Gerätes, welches eine Internetverbindung ermöglicht und mit einer computergestützten Steuerung der einzelnen Komponenten der Vorrichtung,
wobei die Steuerung die Abfragen der Wegpunkte, des Wetters an den einzelnen Wegpunkten und die grafische Darstellung mittels der Anzeige übernimmt.

6. Vorrichtung nach Anspruch 5, wobei ein Radioempfangsmodul, welches Traffic Message Channel (TMC)-fähig ist, vorgesehen ist, über welches die Steuerung die Abfrage der Staue vornimmt.

7. Vorrichtung nach Anspruch 5 oder 6, wobei auf der Anzeige das Diagramm dargestellt wird.

8. Vorrichtung nach Anspruch 5 oder 6, wobei auf der Anzeige eine Straßenkarte dargestellt wird, auf der die aktuelle Position zu sehen ist und der Zustand der Straße, je nach Wetterdaten und/oder Staumeldungen.

9. Vorrichtung nach einem der Ansprüche 5 bis 8, wobei eine Ausgabemöglichkeit für akustische Signale vorhanden ist.

10. Vorrichtung nach einem der Ansprüche 5 bis 9, wobei die Anzeige als Berührungsbildschirm ausgebildet ist und/oder die Bedienelemente zumindest teilweise durch den Berührungsbildschirm realisiert sind.

11. Vorrichtung nach einem der Ansprüche 5 bis 10, wobei elektronisches Kartenmaterial auf einem Speichermedium in der Vorrichtung vorgesehen ist, auf welches die computergestützte Steuerung zugreifen kann.

## Claims

1. Method for an improved navigation system,
for which, initially, the start and end point is determined,
then, with access to electronic map material, a navigation route, comprising of multiple waypoints, is created,
whereby, a minimum of one waypoint is between the start and end point,
then, by means of an Internet search, an enquiry about the actual weather data is made, as well as the time required for the sections of the route between the waypoints,
the weather data of the respective waypoints, as well as the sections of the route between the waypoints are allocated,
the correction values for the different weather data for the time required are allocated
the time required for the sections of the route between the waypoints are adapted by the corresponding correction values, based on the prevailing weather at the sections of the route, as well as from the start to the end point,
whereby, the waypoints and/or the weather data are/is stored in a table and sorted according to their distance from the start point,
whereby, the sorted waypoints and/or weather data are/is prepared as a diagram,
whereby, using a suitable location, the momentary position of the user is entered into the diagram
and the correction values for the different weather data can be individually adapted,
whereby, the diagram is a segmented line, the segments of which are determined by the individual waypoints and the presentation of the segments is different according to the weather data
and, whereby, the different presentations of the segments of the route are by different colours and/or different patterns.

2. Method in accordance with claim 1, whereby, using an Internet search and/or a radio receiving module, which is Traffic Message Channel (TMC) capable, can enquire about the congestion messages at the individual waypoints.

3. Method in accordance with claim 2, whereby, congestion can also be displayed on the diagram at, or between, the waypoints.

4. Method in accordance with one of the claims 1 to 3, whereby, the weather search and/or congestion search for the individual waypoints is repeated at determined time intervals, in order to maintain the actual weather data.

5. A device which includes a program or an App to carry out the method in accordance with one of the claims 1 to 4,
with a housing, a display, a GPS receiver, with control elements for the input of the start and/or end points,
with an Internet connection and/or an option to connect a device that enables connection to the Internet and with computer-aided control for the individual components of the device,
whereby, the control assumes the searches for the waypoints, the weather at the individual waypoints and graphical presentation of the display.

6. A device in accordance with claim 5, whereby, a radio receiving module, which is Traffic Message Channel (TMC) capable, is provided, through which control of the search for congestion is carried out.

7. A device in accordance with claim 5 or 6, whereby, the diagram is presented on the display.

8. A device in accordance with claim 5 or 6, whereby, a road map is presented on the display, on which the actual position can be viewed and the condition of the road, depending on the weather data and/or congestion messages.

9. A device in accordance with one of the claims 5 to 8, whereby, there is an option for output for acoustic signals.

10. A device in accordance with one of the claims 5 to 9, whereby, the display is formed as a Touchscreen and/or the control elements can be realized, at least partly, by a Touchscreen.

11. A device in accordance with one of the claims 5 to 10, whereby, electronic map material is provided on a memory medium in the device, on which the computer-aided control can access.

## Revendications

1. Procédé pour un système de navigation amélioré,
consistant dans un premier temps à fixer le point de départ et celui d'arrivée,
puis à élaborer, en accédant à du matériel cartographique électronique, un itinéraire de navigation composé de plusieurs points de cheminement,
sachant qu'entre le point de départ et celui d'arrivée se trouve au moins un point de cheminement,
qu'ensuite sont consultés, au moyen d'une consultation sur Internet, les données météorologiques actuelles pour chaque point de cheminement, ainsi que les temps requis pour parcourir les segments d'itinéraires délimités par les points de cheminement,
qu'ensuite les données météo sont attribuées aux points de cheminement respectifs ainsi qu'aux segments d'itinéraire délimités par les points de cheminement,
qu'aux différentes données météorologiques sont attribuées des valeurs correctives pour le temps requis,
que le temps requis pour les segments d'itinéraire délimités par les points de cheminement subit une adaptation en fonction de la météo prédominante sur les segments d'itinéraire ainsi qu'entre le point de départ et d'arrivée, du fait de l'application des valeurs correctives correspondantes,
sachant que les points de cheminement et/ou les données météo sont déposé(e)s dans un tableau et qu'ils/qu'elles sont trié(e)s en fonction de leur éloignement par rapport au point de départ,
sachant que les points de cheminement et/ou les données météo triés sont traité(e)s sous forme de diagramme,
sachant que la position actuelle de l'utilisateur est inscrite moyennant une détermination appropriée du lieu dans le diagramme,
et que les valeurs correctives pour les différentes données météo sont adaptables individuellement,
sachant que le diagramme est une ligne segmentée dont les segments sont déterminés par les différents points de cheminement et dont la représentation des segments diffère en fonction des données météo
et sachant que les différentes représentations des segments d'itinéraire ont lieu au moyen de différentes colorations et/ou de différents motifs.

2. Procédé selon la revendication 1, sachant que par une consultation d'Internet et/ou d'un module de réception radio apte au service Traffic Message Channel (TMC), il est possible de consulter les messages de bouchons relatifs aux différents points de cheminement.

3. Procédé selon la revendication 2, sachant que les bouchons au niveau des points de cheminement ou entre ces points sont également affichés dans le diagramme.

4. Procédé selon l'une des revendications 1 à 3, sachant qu'à des intervalles de temps définis est/sont répétée(s) la consultation de la météo et/ou la consultation des bouchons pour les différents points de cheminement afin de maintenir l'actualité des données météo.

5. Dispositif comprenant un programme ou une appli pour réaliser le procédé selon l'une des revendications 1 à 4,
comprenant un boîtier, un affichage, un récepteur GPS, des éléments de commande pour saisir le point de départ et/ou le point d'arrivée,
comprenant une connexion Internet et/ou une possibilité de raccorder un appareil permettant de se connecter à Internet, et comprenant une commande des différents composants du dispositif assistée par ordinateur,
sachant que la commande se charge de consulter les points de cheminement, la météo aux différents points de cheminement, et de la représentation graphique par le biais de l'affichage.

6. Dispositif selon la revendication 5, sachant qu'est prévu un module de réception radio apte au service Traffic Message Channel (TMC) via lequel la commande se charge de consulter les bouchons.

7. Dispositif selon la revendication 5 ou 6, sachant que le diagramme est représenté à l'affichage.

8. Dispositif selon la revendication 5 ou 6, sachant qu'à l'affichage est représentée une carte routière sur laquelle l'on peut voir la position actuelle et l'état de la route en fonction des données météo et/ou des messages de bouchons.

9. Dispositif selon l'une des revendications 5 à 8, sachant qu'une possibilité d'émission de signaux acoustiques est présente.

10. Dispositif selon l'une des revendications 5 à 9, sachant que l'affichage est configuré en écran tactile et/ou que les éléments de commande sont réalisés au moins en partie par l'écran tactile.

11. Dispositif selon l'une des revendications 5 à 10, sachant que du matériel cartographique électronique est prévu sur un support d'enregistrement dans le dispositif, support auquel la commande assistée par ordinateur peut accéder.
